# EUROPÄISCHE PATENTSCHRIFT

(11) **EP 1 380 446 B1**
(45) Veröffentlichungstag und Bekanntmachung des Hinweises auf die Patenterteilung: **08.08.2007**
(21) Anmeldenummer: 03008395.0
(22) Anmeldetag: 11.04.2003
(51) Int. Cl.: B60D 1/54

(54) **Elektrisch ansteuerbare Anhängekupplung**
Controlled electric powered tow bar coupling
Attelage contrôlé electriquement

(30) Priorität: 11.07.2002 DE 10231222
(43) Veröffentlichungstag der Anmeldung: 14.01.2004
(73) Patentinhaber: Dr.Ing. h.c. F. Porsche Aktiengesellschaft, 70435 Stuttgart (DE)
(72) Erfinder: Reutlinger, Peter, 75015 Bretten (DE); Palmer, Eberhard, 71665 Vaihingen (DE); Piede, Andreas, 75428 Illingen (DE)

(56) Entgegenhaltungen:
- EP-A- 0 388 848
- EP-A- 1 084 872
- US-B1- 6 234 511

## Beschreibung

Die Erfindung betrifft eine Anhängekupplung für Kraftfahrzeuge, mit einer Kupplungskugel. Die bekannte Anhängekupplung umfaßt ferner einen Antriebsmotor, durch welchen der Kugelhals mit der Kupplungskugel von einer Arbeitsstellung in eine Ruhestellung umgekehrt bewegbar ist. Eine solche Anordnung ist beispielsweise bereits aus der EP 0 832 000 B1 bekannt. Bei dieser bekannten Anordnung wird die Steuerung für den Antrieb für das Bewegen des Kugelhalses dann blockiert, wenn der Motor des Fahrzeuges läuft. Zur Erfassung der Arbeits- oder Ruhestellung der Anhängekupplung sind jeweils Sensoren beispielsweise in Form von Endlagenschaltern vorgesehen. Eine Steuerung stellt sicher, dass entweder ein Bewegen des Kugelhalses oder ein Fahren des Fahrzeugs zugelassen ist. Die Steuerung blockiert den Antrieb für die Bewegung des Kugelhalses, wenn der Motor des Fahrzeugs läuft.

Es ist die Aufgabe der vorliegenden Erfindung, die Sicherheit bei der Ansteuerung der Anhängekupplung weiter zu verbessern.

Diese erfindungsgemäße Aufgabe wird mit den kennzeichnenden Merkmalen des unabhängigen Anspruchs gelöst, wonach verschiedene Bedingungen definiert sind, und wobei beim Vorliegen einer dieser Bedingungen die Ansteuerung der Bewegung der Anhängezugvorrichtung unterbunden wird.

Hierbei ist es besonders vorteilhaft, daß diese verschiedenen Bedingungen ODER verknüpft sind. Damit ist sichergestellt, dass in jedem Fall, wenn eine der definierten Bedingungen nicht erfüllt ist, eine Bewegung der Anhängezugvorrichtung unterbleibt, wodurch wiederum die Sicherheit für umstehende Personen weiter erhöht wird.

Das Erfassen der Fahrgeschwindigkeit als eine dieser Bedingung hat den Vorteil, dass nicht zwei Bewegungen, die Bewegung des Fahrzeuges und die Bewegung der Anhängezugvorrichtung, gleichzeitig stattfinden und sowohl der Fahrer des Fahrzeuges als auch umstehende Personen nicht auf zwei Vorgänge gleichzeitig achten müssen. Im übrigen ist die Geschwindigkeit v im Fahrzeug bereits für weitere zu steuernde Vorgänge, wie beispielsweise die Motorsteuerung bekannt und muss lediglich vom Steuergerät für die Ansteuerung der Bewegung der Anhängezugvorrichtung ausgelesen werden.

Eine Überprüfung, ob der Anhänger am Fahrzeug angekoppelt ist, ist einfach möglich, indem die Steckdose zur elektrischen Verbindung des Anhängers mit einem entsprechenden überwacht wird. Hier sind Sensoren einsetzbar, die einen Anhänger erkennen. Eine rein elektronisch Erfassung ist möglich, in dem im ausgeschalteten Zustand die Fahrtrichtungsanzeiger kurz bestromt werden und über den sich einstellenden Spannungspegel der Anhänger erkannt wird. Durch eine solche Auswertung ist sichergestellt, dass die Anhängezugvorrichtung dann nicht angesteuert wird, wenn ein Anhänger angekoppelt ist.

Die Überprüfung der Heckscheibe oder Heckklappe darauf, daß sie geöffnet sind, ist eine Bedingung, die vorteilhafterweise sicherstellt, daß sich eine Person im direkten Schwenkbereich der Anhängekupplung befindet.

Letztendlich ist es vorteilhaft die Bewegung der Anhängezugvorrichtung selbst zu überwachen. Da dies die Möglichkeit bietet, bei einem auftretenden Wiederstand, beispielsweise weil ein Kind sich in den Bewegungsraum der Anhängezugvorrichtung hineinbewegt hat, die Bewegung der Anhängezugvorrichtung zu stoppen und/oder die Bewegungsrichtung umzukehren.

Ausführungsbeispiele der Erfindung sind in der Zeichnung dargestellt und in der nachfolgenden Beschreibung näher erläutert.

Es zeigen
- Fig. 1: den Prinzipaufbau einer schwenkbaren Anhängekupplung und
- Fig. 2: die Ansteuerlogik in schematischer Übersicht.

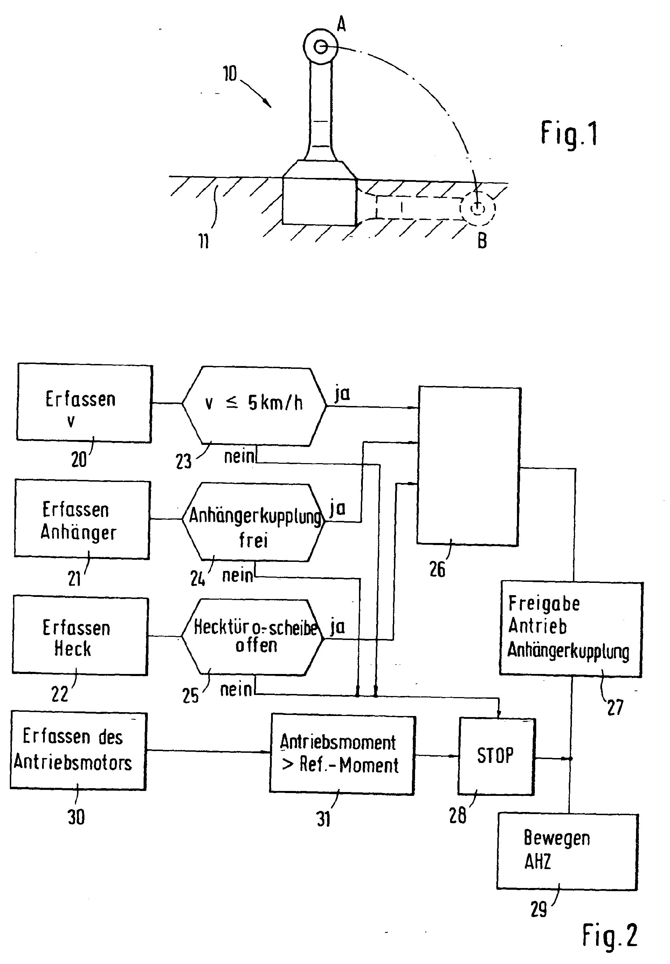

Fig. 1 zeigt den Prinzipaufbau einer schwenkbaren Anhängekupplung. Hier ist eine Anhängekupplung 10, welche am Heck 11 eines Fahrzeuges angebracht ist, in einer Arbeitsstellung A und in einer Ruhestellung B dargestellt. Die Strichpunktlinie zwischen den beiden möglichen Endstellungen der Anhängekupplung 10 kennzeichnet den Bewegungsradius der Anhängekupplung. In dieser Figur ist ein Seitwärtsschwenken der Anhängekupplung dargestellt, wobei jedoch auch Schwenkbewegungen nach unten oder auch schräge Schwenkbewegungen bekannt und möglich sind. Aus Gründen der Übersichtlichkeit wurde die ebenfalls übliche Steckdose zur elektrischen Verbindung eines Anhängers mit dem Zugfahrzeug hier nicht dargestellt.

Figur 2 zeigt in einer schematischen Darstellung, welche Größen und Bedingungen erfasst und wie diese ausgewertet werden, um die Sicherheit der Ansteuerung der Bewegung der Anhängekupplung zu verbessern.
Zunächst werden in ersten Schritten 20, 21 und 22 verschiedene Größen erfasst. So wird im Schritt 20 die Geschwindigkeit v des Fahrzeuges ermittelt und in einer anschließenden Abfrage 23 geprüft, ob die Geschwindigkeit v einen vorgebbaren Wert, der hier mit 5km/h definiert ist, überschreitet. Da die Geschwindigkeit v im Motormanagement bereits vorliegt, beispielsweise für die Motorsteuerung, kann dieses Signal hier einfach ermittelt und anschließend ausgewertet werden. Im Schritt 21 wird geprüft, ob an der Anhängekupplung ein Anhänger befestigt ist. Dies geschieht in einer nachgeordneten Abfrage 24 beispielsweise durch Überprüfung der Steckdose für den Anhänger. Erkennt das Bordnetz einen Verbraucher, dann wird ein Anhänger erkannt. Denkbar sind aber auch Sensoren am Kugelkopf der Anhängekupplung, die ein Signal abgeben, wenn ein Anhänger befestigt ist. Des weiteren wird im Schritt 22 die Hecktür bzw. die Heckscheibe geprüft, wobei beispielsweise durch eine entsprechende Sensorik im Schließbereich der Hecktür und/oder der Heckscheibe ermittelt wird, ob der Heckbereich geschlossen oder geöffnet ist, so dass eine dem Schritt 22 nachgeordnete Abfrage 25 prüft, ob die Hecktür und/oder die Heckscheibe geöffnet ist.

Die Ja-Ausgänge der Abfragen 23, 24 und 25 sind an eine Logik 26 geführt. Hier werden die drei Signale UND verknüpft und nur beim vorliegen eines Signals an allen drei Eingängen, erfolgt in einem Arbeitsschritt 27 die Freigabe der Ansteuerung des Antriebs der Anhängekupplung. Sollte eine der Bedingungen 23, 24 oder 25 nicht erfüllt sein, dann bleibt die Bewegung der Anhängezugvorrichtung gesperrt bzw. wird gestoppt, wenn sich eine Bedingung während der Bewegung der Anhängekupplung verändert. Hierzu sind die Nein - Ausgänge der Abfragen 23, 24 und 25 in einer Logik 28 ODER verknüpft, so dass bereits bei Änderung einer Bedingung ein STOP Signal ausgegeben wird.
Zusätzlich wird während er Bewegung der Anhängekupplung in einem Schritt 30 noch das Drehmoment des Antriebsmotors erfasst, und beim Vorliegen eines erhöhten Antriebsmomentes im Arbeitsschritt 31 darauf geschlossen, dass ein Hindernis im Schwenkbereich die Bewegung der Anhängekupplung stört, so dass dann aus Sicherheitsgründen die Bewegung der Anhängekupplung im Schritt 28 gestoppt wird. Wahlweise ist es auch möglich in diesem Fall die Bewegungsrichtung der Anhängekupplung nach dem Stoppen umzukehren und die Anhängkupplung wieder zumindest um einen Teilbereich zurückzufahren ,

## Patentansprüche

1. Elektrisch ansteuerbare Anhängekupplung für Kraftfahrzeuge mit einer Kupplungskugel, mit einem Kugelhals, mit einem Antriebsmotor zum Bewegen der Anhängekupplung von einer Arbeitsstellung in eine Ruhestellung und umgekehrt, mit einer Steuerung zum Betreiben des Antriebs, **dadurch gekennzeichnet, dass** die Geschwindigkeit (v) des Fahrzeuges ermittelt und mit einem vorgebbaren Wert verglichen wird, dass geprüft wird, ob ein Anhänger an der Anhängekupplung befestigt ist und dass ermittelt wird, ob die Hecktür und/oder die Heckscheibe des Fahrzeuges geöffnet sind und dass eine Freigabe zum Ansteuern der Bewegung der Antriebskupplung nur erfolgt, wenn an die Geschwindigkeit (v) des Fahrzeuges den vorgebbaren Grenzwert nicht überschreitet, wenn kein Anhänger befestigt ist und wenn die Heckscheibe oder Hecktür geöffnet sind.

2. Elektrisch ansteuerbare Anhängekupplung nach Anspruch 1, **dadurch gekennzeichnet, dass** von einer Abfrage (23) ein Signal an eine Logik (26) abgegeben wird, wenn die Geschwindigkeit des Fahrzeuges den vorgebbaren Wert von beispielsweise 5km/h nicht überschreitet.

3. Elektrisch ansteuerbare Anhängekupplung nach Anspruch 1, **dadurch gekennzeichnet, dass** von einer Abfrage (24) zum Prüfen, ob ein Anhänger an der Anhängerkupplung befestigt ist, ein Signal an die Logik (26) abgegeben wird, wenn das kein Anhänger erkannt wird.

4. Elektrisch ansteuerbare Anhängekupplung nach Anspruch 3, **dadurch gekennzeichnet, dass** ein Anhänger erkannt wird, wenn das Bordnetz beim Überprüfen der Steckdose für den Anhänger einen Verbraucher erkennt oder wenn ein Sensor am Kupplungskopf ein Signal abgibt, dass ein Anhänger an der Anhängekupplung befestigt.

5. Elektrisch ansteuerbare Anhängekupplung nach Anspruch 1, **dadurch gekennzeichnet, dass** eine Abfrage (25) die Sensorik im Schließmechanismus der Hecktür und/oder die Heckscheibe des Fahrzeuges prüft und im Falle einer geöffneten Hecktür und/oder die Heckscheibe des Fahrzeuges ein Signal an die Logik (26) abgibt.

6. Elektrisch ansteuerbare Anhängekupplung nach Anspruch 1, **dadurch gekennzeichnet, dass** bei Wegfall eine der Bedingungen die Bewegung der Anhängekupplung gestoppt wird.

7. Elektrisch ansteuerbare Anhängekupplung nach Anspruch 1, **dadurch gekennzeichnet, dass** zusätzlich die Bewegung der Anhängekupplung unterbunden oder gestoppt wird, wenn das Drehmoment des Antriebsmotors der Anhängekupplung einen vorgebbaren Referenzwert überschreitet.

## Claims

1. An electrically actuatable trailer coupling for motor vehicles, with a coupling ball, with a ball neck, with a drive motor for moving the trailer coupling from an operating position into a rest position and vice versa, with a control for operating the drive, **characterised in that** the speed (v) of the vehicle is determined and compared with a presettable value, **in that** it is checked whether or not a trailer is attached to the trailer coupling and **in that** it is determined whether or not the tailgate and/or the rear window of the vehicle are open, and **in that** clearance for triggering the movement of the trailer coupling only takes place if the speed (v) of the vehicle does not exceed the presettable limit value, if a trailer is not attached and if the rear window or tailgate are open.

2. An electrically actuatable trailer coupling according to claim 1, **characterised in that** a signal is sent from an interrogation unit (23) to a logic unit (26) if the speed of the vehicle does not exceed the presettable value of e.g. 5 km/h.

3. An electrically actuatable trailer coupling according to claim 1, **characterised in that** a signal is sent from an interrogation unit (24), which checks whether or not a trailer is attached to the trailer coupling, to the logic unit (26) if a trailer is not detected.

4. An electrically actuatable trailer coupling according to claim 3, **characterised in that** a trailer is detected if the on-board network detects a consumer when checking the socket for the trailer or if a sensor on the coupling head sends a signal that a trailer is attached to the trailer coupling.

5. An electrically actuatable trailer coupling according to claim 1, **characterised in that** an interrogation unit (25) checks the sensor system in the closing mechanism of the tailgate and/or the rear window of the vehicle and sends a signal to the logic unit (26) if the tailgate and/or the rear window of the vehicle are open.

6. An electrically actuatable trailer coupling according to claim 1, **characterised in that** the movement of the trailer coupling is stopped if one of the conditions ceases to apply.

7. An electrically actuatable trailer coupling according to claim 1, **characterised in that** the movement of the trailer coupling is additionally prevented or stopped if the torque of the drive motor of the trailer coupling exceeds a presettable reference value.

## Revendications

1. Attelage pour véhicules automobiles commandable électriquement, avec une boule d'attelage, un col de boule d'attelage, avec un moteur d'entraînement pour le déplacement de l'attelage d'une position de travail vers une position de retour et réciproquement, avec une commande pour la manoeuvre de l'entraînement, **caractérisé en ce que** la vitesse (v) du véhicule est déterminée et comparée à une valeur définissable, **en ce qu'**il est contrôlé si une remorque est fixée à l'attelage, en **en ce qu'**il est déterminé si le hayon et/ou la vitre arrière du véhicule sont ouverts et **en ce qu'**une commande de déplacement de l'accouplement n'est autorisée que si la vitesse (v) du véhicule ne dépasse pas la valeur limite définissable, si aucune remorque n'est fixée et si la vitre arrière ou le hayon sont ouverts.

2. Attelage commandable électriquement selon la revendication 1, **caractérisé en ce qu'**un signal est délivré à une logique (26) à partir d'une demande (23) si la vitesse du véhicule ne dépasse pas la valeur définissable de 5 km/h, p. ex.

3. Attelage commandable électriquement selon la revendication 1, **caractérisé en ce qu'**un signal est délivré à la logique (26) à partir d'une demande (24) de contrôle si une remorque est fixée à l'attelage, quand aucune remorque n'est détectée.

4. Attelage commandable électriquement selon la revendication 3, **caractérisé en ce qu'**une remorque est détectée si le réseau de bord détecte un récepteur en contrôlant la prise électrique pour la remorque, ou si un capteur sur la boule d'attelage délivre un signal suivant lequel une remorque est fixée à l'attelage.

5. Attelage commandable électriquement selon la revendication 1, **caractérisé en ce qu'**une demande (25) contrôle le dispositif à capteur dans le mécanisme de fermeture du hayon et/ou de la vitre arrière du véhicule, et délivre un signal à la logique (26) si le hayon et/ou la vitre arrière du véhicule sont ouverts.

6. Attelage commandable électriquement selon la revendication 1, **caractérisé en ce que** le déplacement de l'attelage est arrêté en cas de défaut d'une des conditions.

7. Attelage commandable électriquement selon la revendication 1, **caractérisé en ce que** le déplacement de l'attelage est en outre empêché ou arrêté si le couple du moteur d'entraînement de l'attelage dépasse une valeur de référence définissable.
